# EUROPEAN PATENT SPECIFICATION

(11) **EP 2 026 313 B1**
(45) Date of publication and mention of the grant of the patent: **23.02.2011**
(21) Application number: 07425534.0
(22) Date of filing: 17.08.2007
(51) Int. Cl.: G08G 1/0967, G06K 9/00

(54) **A method and a system for the recognition of traffic signs with supplementary panels**
Verfahren und System zur Erkennung von Verkehrszeichen mit Zusatztafeln
Procédé et système pour la reconnaissance des panneaux routiers avec des panneaux supplémentaires

(43) Date of publication of application: 18.02.2009
(73) Proprietor: Magneti Marelli S.p.A., 20011 Corbetta (MI) (IT)
(72) Inventor: Ghisio, Guido, 10078 Venaria Reale (Torino) (IT); Monchiero, Gianluca, 10078 Venaria Reale (Torino) (IT); Broggi, Alberto c/o Universita'di Parma, 43100 Parma (IT)
(74) Representative: Deambrogi, Edgardo

(56) References cited:
- EP-A- 1 508 889
- DE-A1- 19 736 774
- DE-A1- 19 938 263

## Description

The present invention relates to the automatic recognition of traffic signs as a driving aid. More specifically, it relates to a method and a system for the recognition of standing traffic signs, for use in a vehicle in combination with a driving aid system or to provide the driver of the vehicle with information additional to the direct view and perception of a traffic sign that he may have.

In driving aid systems, traffic-sign recognition techniques are known which are based on filming of the environment outside the vehicle in the direction of travel by means of one or more front video cameras and analysis of the image. An image area is recognized as belonging to a traffic sign by virtue of particular shape or colour characteristics and is subsequently classified by neural networks to interpret the information conveyed by the sign.

DE 197 36 774 concerns an information display method in vehicle and discloses a system including a camera connected with a control and evaluation unit for an image recognition, whereby a section of the image of the camera, which contains a traffic sign, is indicated on a display unit after segmentation through the control and evaluation unit.

Currently, recognition techniques based on monocular vision or on stereo vision are known, the latter being used for the purpose of also assessing the distance of the sign from the approaching vehicle, for example, for the correct processing of the image (enlargement, reduction) with a view to the subsequent step of recognition by means of neural networks.

However, the known techniques do not address, or do not resolve in a satisfactory manner, the problem of recognizing supplementary panels of traffic signs which are located in close proximity to the sign, generally above or below it, in order to provide information that can define the area to which the sign applies, specify the meaning of the sign, or limit the effectiveness of the signs to some categories of users or to predetermined periods of time.

Generally, the supplementary panels are rectangular and have a white background on which symbols or predetermined brief and concise explanatory inscriptions easily interpreted or read by a vehicle driver are shown.

However, the white colour of a panel tends to darken with the passage of time and with the aging of the sign so as to adopt grey shades which make it easily confused with background elements of an image taken from the vehicle, for example, with areas of sky or buildings, thus rendering its analysis difficult and the result of its recognition often inaccurate or ineffective.

The object of the present invention is therefore to provide a method and a system adapted to permit quick and effective recognition of supplementary panels of traffic signs, overcoming the disadvantages of the prior art.

According to the present invention, this object is achieved by virtue of a method having the characteristics defined in Claim 1 and an on-board automatic traffic-sign recognition system for vehicles as defined in claim 15. Specific embodiments are defined in the dependent claims 2-14 and 16.

Further subjects of the invention are an automatic traffic-sign recognition system and a driving aid system installed on board a vehicle, as claimed.

In summary, the present invention is based on the principle of rendering more effective the interpretation of an instruction supplied by means of a traffic sign which is recognizable by means of an artificial viewing and image recognition system, with provision for searching for and recognizing any supplementary panels of the sign in image areas which satisfy a predetermined relationship of location relative to the image area bearing the traffic sign. In a general embodiment, the image areas neighbouring the image area of a traffic sign are searched. In an improved embodiment in which a stereoscopic imaging system is available, the search for and recognition of supplementary panels are facilitated by the fact that they are carried out on image areas which represent objects that are coplanar with the traffic sign identified.

Further advantages and characteristics of the present invention will become clear from the following detailed description, given with reference to the appended drawings which are provided purely by way of non-limiting example and in which:

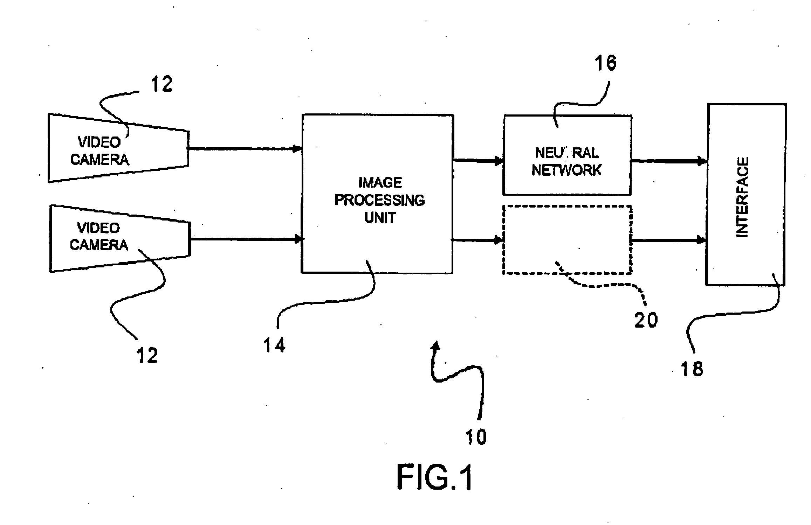

Figure 1 is a block diagram showing an example of a traffic-sign recognition system according to the invention,
Figure 2 shows a scene representative of an environment surrounding the vehicle,
Figure 3 shows a panoramic video image representative of the scene, and
Figure 4 shows, in an enlarged view, an image area selected from the panoramic image and showing a traffic sign with supplementary panel.

A system for providing information to the driver of a vehicle based on the recognition of traffic signs is indicated 10. An assembly for detecting the environment surrounding the vehicle, in particular, an area in front of the vehicle, may comprise a single filming device or a pair of filming devices 12 such as, for example, video cameras or the like, operating at visible wavelengths and preferably arranged on a front surface of the vehicle, for example, in the vicinity of the windscreen or - in a further forward position - on the bonnet or on the front bumpers, or even on the roof.

The filming devices 12 are connected to a processing unit 14, preferably in the form of a digital-signal processor, to which they supply image signals representative of the environment outside the vehicle in the direction of travel thereof, that is, of a so-called front scene.

The processing unit 14 is in turn connected to an image-recognition computer module 16 adapted to perform the recognition of a traffic sign filmed in a previously selected image area by classification of the shape, colour or information content (symbols, inscriptions) of the sign in accordance with known techniques, for example, with the use of neural networks.

The recognition module 16 is also connected to a user interface 18 to which it supplies the image signal taken, optionally processed, or a predetermined model representative of the sign recognized, in order to display the information conveyed by the sign to the vehicle driver on an on-board display unit. The on-board display unit is, for example, an LCD TFT display unit, preferably arranged on the vehicle's dashboard, combined with a dialogue device provided with a screen which is arranged on the central pillar of the dashboard or is foldable into a housing in the upper portion, or may even be located in the instrument panel.

In an alternative embodiment, without departing from the principles of the invention, a person skilled in the art will also be able to arrange for voice communication with the driver by synthesis of the information content of the sign.

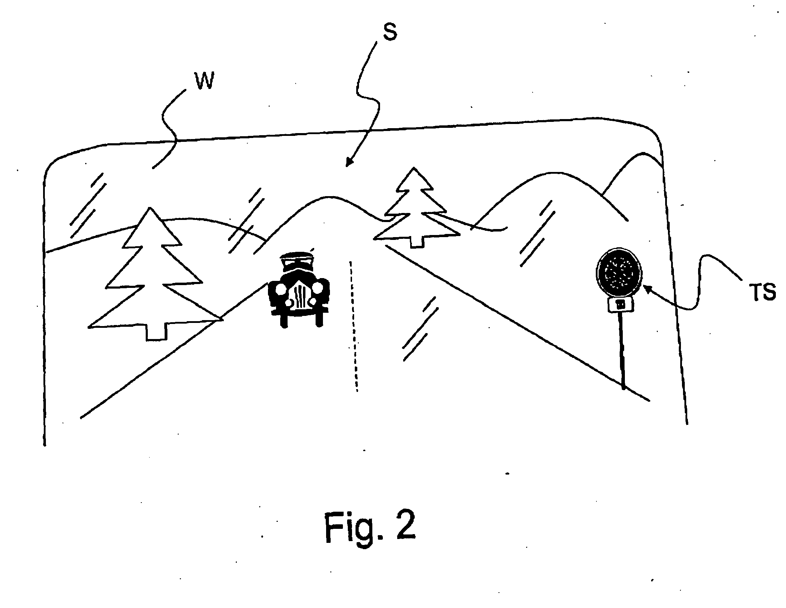

Figure 2 shows an example of a driving scenario S, for example, as seen through the windscreen W of the vehicle.

The processing unit 14 is adapted to acquire image signals supplied by the filming devices 12 and to process the images I relating to the driving scenario S of the vehicle. In particular, it is arranged to recognize a repertoire of predetermined shapes in the images I and to assess, in accordance with a predefined criterion, which of them satisfy a predetermined recognition condition depending on one or more traffic sign identification parameters.

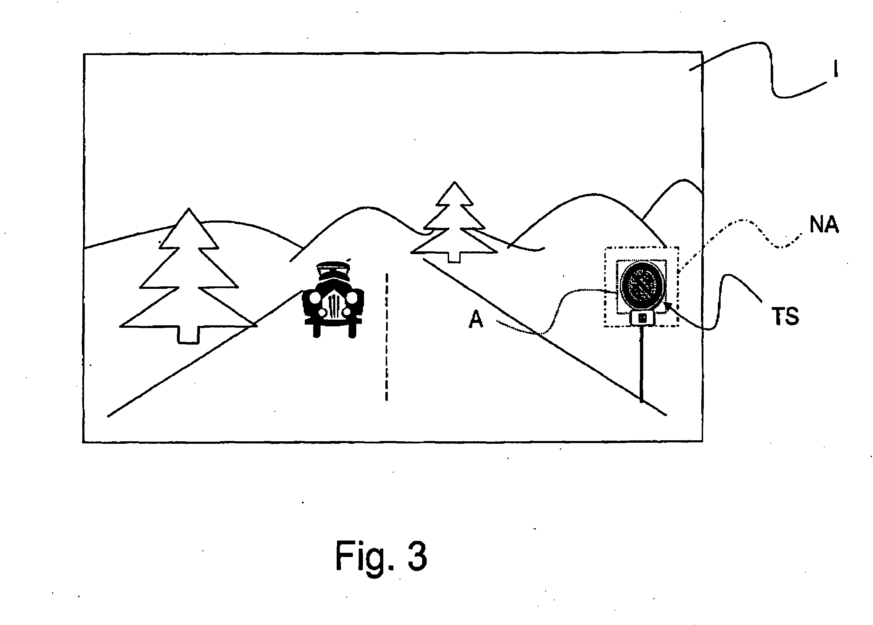

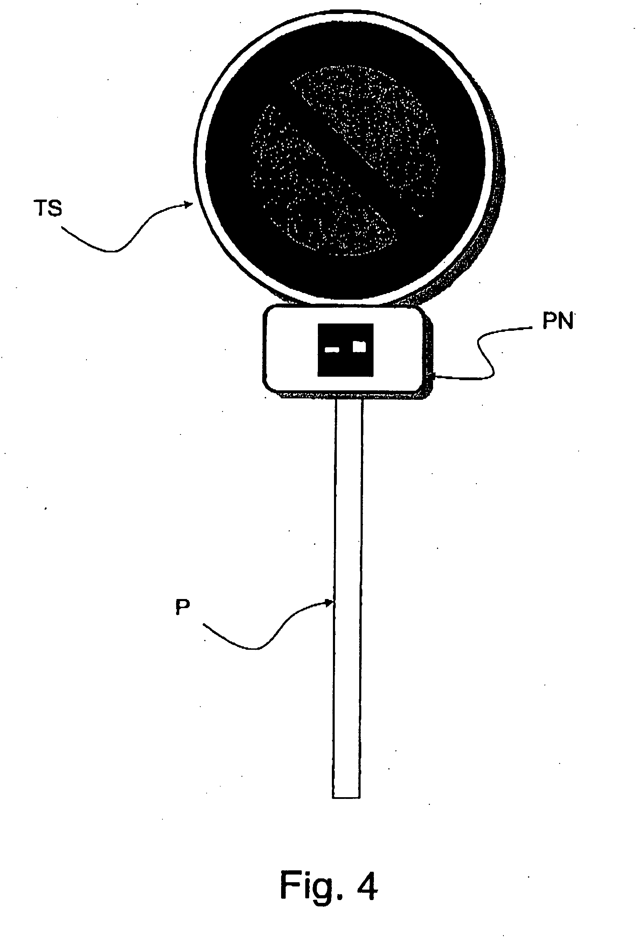

Figures 3 and 4 show, respectively, an image I of the scene S and a selected area A of the image I which is recognized as including a representation of a traffic sign TS.

The traffic sign TS is carried by a supporting post P and may be, for example, circular, triangular, or square. The drawings show a rectangular supplementary panel PN which is associated with the sign and carries a symbol and/or an inscription, generally but not exclusively of a dark colour on a light background.

The processing unit 14 is preferably arranged to process images I in a predefined format, for example RGB, in which each point of the image is represented by a triplet of values indicative of the red, green and blue colour amount associated with that point.

Since the colours of the traffic signs may differ according to the illumination of the environment (which may be different at different times of day, for example, in full daylight or at dusk, or according to weather conditions), the unit 14 performs a pre-processing of the image signal acquired, adapted to detect the colour spectrum of the light falling on the scene by analysis of the contributions to the colour of a reference region in the image; this is preferably the road surface which actually has a generally grey colour that has identical quantity values of the basic colours in the RGB space, irrespective of light or dark shading. In accordance with this information, the unit 14 is adapted to modify the colours of the image to obtain an image with "normalized" colours, that is, such as to have the colours which it would have in a predetermined illumination condition, for example, incident white sunlight, so that the contributions to the overall colour of the region representing the road surface are constant for all of the basic colours.

After pre-processing, the unit 14 performs an analysis of each point of the image to check whether it belongs to the red, blue and yellow domain, in particular, in the predetermined shade of these colours which is typical of traffic signs. This processing takes place by comparison of the colorimetric characteristics of each image point with predetermined threshold values stored according to the different types of traffic sign. Connected (contiguous) zones of the same colour are detected, processed, stored and marked so that the unit supplies a selected image area A containing the traffic sign image (there may be more than one traffic sign included in the selected area A).

The processing unit then performs a comparison of the image taken in the selected image area A with a repertoire of images of predetermined shapes (for example: circles, triangles, rectangles) to select one or more categories of traffic signs according to their shape. The techniques that are known in systems for recognizing objects from images are generally used for the recognition of the repertoire shapes. For example, the images are compared by counting how many points the two images have in common and normalizing the result with respect to the number of points of the model with which the comparison is made.

Specific measures are adopted for particular sign categories. For example, for derestriction signs having a white background with an oblique black transverse band, the processing unit applies a procedure aimed at identifying oblique boundary lines defined by the transition between white colour and black colour, selecting lines which are parallel to one another and which conform to predetermined size and position (orientation) conditions, and checking that the area delimited by the circle circumscribing the oblique black band contains only grey, black or white image points.

The image areas A thus processed are supplied to the recognition module 16 which is arranged to carry out the recognition of the traffic sign TS by means of one or more previously trained neural networks. The original image within the area A considered is resized to a predetermined size (for example 50x50 points) and converted into a grey colour scale. According to the pre-classification based on colour and shape performed by the processing unit, the module 16 uses a set of neural network parameters that are polarized towards the category of sign expected. The recognition module 16 advantageously includes a plurality of neural networks equal to the number of possible pre-classifications. The neural network outputs a score associated with each sign which that particular network is adapted to detect. The sign with the highest score is thus that which most resembles, to the neural network, the image A input and is the sign recognized

If the recognition score produced by the neural network is below a predetermined threshold value, the sign is considered as not recognized.

Finally, a recognized sign is supplied to the interface 18 for display to the driver.

The unit 14 is also arranged, according to the invention, to check for the presence of a supplementary panel PN by examining a neighbouring area NA extending around the area A which is a candidate for representing a traffic sign.

The traffic-sign categories for which supplementary panels are permitted or for which the supplementary panels carry information that is complementary to the sign and necessary for understanding it, rather than additional information which is less important from the point of view of driving safety, can advantageously be identified.

It is thus possible to limit the work of the analysis of a neighbouring image area extending around the traffic sign area to those traffic-sign categories which accept supplementary panels. Only if this condition is confirmed does the unit 14 perform a second image analysis in the neighbouring area extending around the image area A which is a candidate for representing the traffic sign. In particular, depending on the category of traffic sign identified, if the arrangement of the informative panel is standardized, the additional image analysis relates solely to a neighbouring area disposed below or above the road sign area A selected, the dimensions of which can be predetermined according to the size of the image area A. Specifically, the processing unit is arranged to extract the dominant colour of the area, that is, to check whether the neighbouring area includes a predetermined minimum number of image points of white or grey colour, in which case it is identified as a candidate for representing a supplementary panel.

The image of the area which is a candidate for representing a supplementary panel can be indicated to the user interface as detected, that is in the "raw" state, or by means of a model thereof resulting from recognition of the symbol contents of the panel. This recognition can be performed by means of an auxiliary optical character recognition module 20 which is adapted to identify predetermined symbols, icons or pictograms or intrinsic structures of possible inscriptions (arrangements of the characters in one or more lines, number of characters or spaces between them, etc.).

In an advantageous embodiment of the invention, two filming devices 12 are provided for stereoscopic filming of the scene S in front of the vehicle, which also enables information to be obtained in relation to the distance of the objects filmed from the vehicle.

If a pair of filming devices 12 is available, the processing unit 14 is arranged to process two images acquired from different viewpoints and then to derive additional information which is useful for further filtering of the traffic signs as well as for a less onerous procedure for the identification and recognition of supplementary panels.

For this purpose, a preliminary analysis is performed on the image area NA neighbouring the selected area A, which is a candidate for representing a supplementary panel, to search for objects that are coplanar with the traffic sign identified, that is, whose distance from the vehicle matches that of the traffic sign. The processing unit is then arranged to analyze the content solely of image areas which show said coplanar objects to check for the possible presence of a supplementary panel in accordance with the techniques described above.

Alternatively, the processing unit is arranged to check whether image areas whose dominant colour is white or grey, which are recognized as potentially ascribable to a supplementary panel, represent objects that are coplanar with the traffic sign and are therefore probably associated therewith or represent objects that appear "beside" the sign due to an optical effect but in fact are located in different planes.

By limiting the processing to small image areas, the computational load on the system is considerably reduced.

Advantageously, the distance and size of a traffic sign can also be detected by means of the stereoscopic technique of filming the scene S in front of the vehicle and, on the basis of these parameters, it is possible to eliminate false positives and signs that have been identified mistakenly due, for example, to the identification of permanent speed-limit signs that are fitted on the rear of some categories of vehicle or signs of other types, for example, advertising signs, which resemble traffic signs.

Naturally, the principle of the invention remaining the same, the forms of embodiment and details of construction may be varied widely with respect to those described and illustrated purely by way of non-limiting example, without thereby departing from the scope of protection of the present invention defined by the appended claims.

## Claims

1. A method for the automatic recognition of traffic signs (TS), on board a vehicle, comprising the steps of:
- filming a scene (S) representative of the environment outside the vehicle in the direction of travel thereof,
- analyzing an image (I) representative of said scene (S) and selecting an image area (A) including a representation of a traffic sign (TS),
- classifying said traffic sign (TS), and
- displaying to the driver of the vehicle the actual image of the sign (TS) and/or a predetermined model representative of the sign (TS) recognized, **characterized in that** it further comprises the steps of:
- analyzing the neighbouring image area (NA) extending around the selected image area (A) including the representation of the traffic sign (TS), wherein the analysis of the neighbouring image area (NA) is limited to traffic-sign categories which accept supplementary panels
- searching for an object which is represented within the neighbouring area (NA) and has predetermined characteristics typical of a supplementary panel (PN), and
- displaying to the driver of the vehicle the actual image of said object and/or a predetermined model representative of the supplementary panel (PN) recognized.

2. A method according to Claim 1, in which the predetermined characteristics typical of a supplementary panel comprise chromatic characteristics.

3. A method according to Claim 1 or 2, in which the analysis of the image area (NA) neighbouring the image area (A) including the representation of the traffic sign (TS) is limited to an area portion which is in a predetermined relationship of spatial arrangement relative to the image area (A) of the traffic sign (TS), according to the classification of the sign (TS).

4. A method according to Claim 3, in which the analysis of the image area (NA) neighbouring the image area (A) including the representation of the traffic sign (TS) is limited to an area portion of predetermined dimensions, according to the size of said image area (A) of the traffic sign (TS).

5. A method according to any one of the preceding claims, in which the filming of a scene (S) representative of the environment outside the vehicle is performed by means of a single filming device (12) operating at visible wavelengths.

6. A method according to any one of Claims 1 to 4, in which the filming of a scene (S) representative of the environment outside the vehicle is performed by means of a pair of filming devices (12) operating at visible wavelengths and adapted to provide a stereoscopic view of the scene (S).

7. A method according to Claim 6, in which the analysis of the image area (NA) neighbouring the image area (A) including the representation of the traffic sign (TS) is limited to an area portion which represents objects that are coplanar with the traffic sign (TS) identified.

8. A method according to any one of the preceding claims, comprising, with a view to the display to the driver of the vehicle of a model representative of the supplementary panel (PN) recognized, the recognition of predetermined symbols, characters, or intrinsic structure of the inscription of the panel (PN).

9. A method according to Claim 2, in which the identification of an object in an area (NA) neighbouring the traffic sign (TS) and having predetermined chromatic characteristics comprises extraction of the dominant colour of the area (NA) and checking whether the colour is white or grey.

10. A method according to Claim 6, comprising the calculation of the absolute size of the traffic sign (TS) identified on the basis of the determined distance of the sign (TS) from the vehicle and the confirmation or cancellation of the result of the recognition of the traffic sign (TS), according to the size calculated.

11. A method according to any one of the preceding claims, in which the selection of an image area (A) including a representation of a traffic sign (TS) is performed according to the recognition of a shape from a repertoire of predetermined shapes, and/or a set of contiguous image elements having predetermined chromatic characteristics.

12. A method according to any one of the preceding claims, comprising:
- determination of the colour spectrum of the light falling on the scene by analysis of the contributions to the overall colour of a reference region that is present in the image (I) representing the road surface, and
- compensation of the basic colour quantities of the elements of the image (I) so as to show the colours which they would have in a predetermined condition of illumination by white sunlight.

13. A method according to any one of the preceding claims, comprising the recognition of derestriction traffic signs having a white background with oblique black transverse bands by means of the following steps:
- identifying boundary lines between white image elements and black image elements,
- selecting, from the boundary lines, parallel lines of predetermined dimensions and orientations,
- identifying a black band area disposed between a pair of selected boundary lines, and
- checking that the area delimited by the circle circumscribing the black band area contains only grey, black or white image points.

14. A method according to any one of the preceding claims, comprising the classification of the traffic sign (TS) by means of neural networks having predetermined parameters according to the expected colour and shape of the sign (TS).

15. An on-board automatic traffic-sign recognition system for vehicles, comprising:
- means (12) for filming a scene (S) of the environment outside the vehicle, facing in the direction of travel of the vehicle and adapted to produce an image (I) representative of said scene (S),
- image processing means (14, 16, 20) arranged for the selection of an image area (A) including a representation of a traffic sign (TS) and for the classification of said traffic sign (TS), and
- display means (18) for displaying to the driver of the vehicle the actual image of the sign (TS) or a predetermined model representative of the sign (TS) recognized,
**characterized in that** the processing means (14, 16, 20) are arranged for:
- analysing the neighbouring image area (NA) extending around the selected image area (A) including the representation of the traffic sign (TS), wherein the analysis of the neighbouring image area (NA) is limited to those traffic-sign categories which accept supplementary panels
- searching for an object represented within the neighbouring area (NA) and having predetermined characteristics typical of a supplementary panel (PN), and
- displaying to the driver of the vehicle the actual image of the object or a predetermined model representative of the supplementary panel (PN) recognized, implementing a method according to any one of Claims 1 to 14.

16. A driving aid system installed on board a vehicle, comprising an automatic traffic-sign recognition system according to Claim 15.

## Patentansprüche

1. Verfahren für die automatische Erkennung von Verkehrszeichen (TS) an Bord eines Fahrzeugs, das die folgenden Schritte umfasst:
- Filmen einer Szene (S), die die Umgebung außerhalb des Fahrzeugs in Richtung von dessen Bewegungsrichtung repräsentiert,
- Analysieren eines Bildes (I), das die Szene (S) repräsentiert, und Auswählen eines Bildbereichs (A), der eine Darstellung eines Verkehrszeichens (TS) enthält,
- Klassifizieren des Verkehrszeichens (TS) und
- Anzeigen des tatsächlichen Bildes des Zeichens (TS) und/oder eines das erkannte Zeichen (TS) repräsentierenden vorgegebenen Modells für den Fahrer des Fahrzeugs,
**dadurch gekennzeichnet, dass** es ferner die folgenden Schritte umfasst:
- Analysieren des benachbarten Bildbereichs (NA), der sich um den ausgewählten Bildbereich (A) erstreckt, der die Darstellung des Verkehrszeichens (TS) enthält, wobei die Analyse des benachbarten Bildbereichs (NA) auf Verkehrszeichenkategorien, die Zusatztafeln akzeptieren, eingeschränkt ist,
- Suchen nach einem Objekt, das in den benachbarten Bereich (NA) dargestellt wird und vorgegebene Eigenschaften besitzt, die für eine Zusatztafel (PN) typisch ist, und
- Anzeigen des tatsächlichen Bildes des Objekts und/oder eines die erkannte Zusatztafel (PN) repräsentierenden vorgegebenen Modells für den Fahrer des Fahrzeugs.

2. Verfahren nach Anspruch 1, wobei die vorgegebene Eigenschaft, die für eine Zusatztafel typisch ist, chromatische Zeichen enthält.

3. Verfahren nach Anspruch 1 oder 2, wobei die Analyse des Bildbereichs (NA), der zu dem Bildbereich (A) benachbart ist, der die Darstellung des Verkehrszeichens (TS) enthält, auf einen Bereichsabschnitt eingeschränkt ist, der sich in einer vorgegebenen Beziehung der räumlichen Anordnung relativ zu dem Bildbereich (A) des Verkehrszeichens (TS) in Übereinstimmung mit der Klassifizierung des Zeichens (TS) befindet.

4. Verfahren nach Anspruch 3, wobei die Analyse des Bildbereichs (NA), der zu dem Bildbereich (A) benachbart ist, der die Darstellung des Verkehrszeichens (TS) enthält, auf einen Bereichsabschnitt mit vorgegebenen Abmessungen in Übereinstimmung mit der Größe des Bildbereichs (A) des Verkehrszeichens (TS) eingeschränkt ist.

5. Verfahren nach einem der vorhergehenden Ansprüche, wobei das Filmen einer Szene (S), die die Umgebung außerhalb des Fahrzeugs repräsentiert, mittels einer einzigen Filmaufnahmevorrichtung (12) ausgeführt wird, die bei sichtbaren Wellenlängen arbeitet.

6. Verfahren nach einem der Ansprüche 1 bis 4, wobei das Filmen einer Szene (S), die die Umgebung außerhalb des Fahrzeugs repräsentiert, mittels eines Paars Filmaufnahmevorrichtungen (12) ausgeführt wird, die bei sichtbaren Wellenlängen arbeiten und dazu ausgelegt sind, eine stereoskopische Ansicht der Szene (S) zu schaffen.

7. Verfahren nach Anspruch 6, wobei die Analyse des Bildbereichs (NA), der dem Bildbereich (A) benachbart ist, der die Darstellung des Verkehrszeichens (TS) enthält, auf einen Bereichsabschnitt eingeschränkt ist, der Objekte repräsentiert, die zu dem identifizierten Verkehrszeichen (TS) koplanar sind.

8. Verfahren nach einem der vorhergehenden Ansprüche, das im Hinblick auf die Anzeige eines die erkannte Zusatztafel (PN) repräsentierenden Modells für den Fahrer des Fahrzeugs das Erkennen vorgegebener Symbole, Zeichen oder intrinsischer Strukturen der Beschriftung der Tafel (PN) umfasst.

9. Verfahren nach Anspruch 2, wobei das Identifizieren eines Objekts in einem Bereich (NA), der dem Verkehrszeichen (TS) benachbart ist und vorgegebene chromatische Charakteristiken hat, das Extrahieren der vorherrschenden Farbe des Bereichs (NA) und das Prüfen, ob die Farbe weiß oder grau ist, umfasst.

10. Verfahren nach Anspruch 6, das das Berechnen der absoluten Größe des identifizierten Verkehrszeichens (TS) auf der Grundlage des bestimmten Abstandes des Verkehrszeichens (TS) von dem Fahrzeug und das Bestimmen oder Widerrufen des Ergebnisses der Erkennung des Verkehrszeichens (TS) in Übereinstimmung mit der berechneten Größe umfasst.

11. Verfahren nach einem der vorhergehenden Ansprüche, wobei die Auswahl eines Bildbereichs (A), der eine Darstellung eines Verkehrszeichens (TS) enthält, in Übereinstimmung mit der Erkennung einer Form aus einem Vorrat vorgegebener Formen und/oder einer Menge nebeneinander liegender Bildelemente mit vorgegebenen chromatischen Eigenschaften umfasst.

12. Verfahren nach einem der vorhergehenden Ansprüche, das umfasst:
- Bestimmen des Farbspektrums des auf die Szene fallenden Lichts durch Analyse der Beiträge zu der Gesamtfarbe eines Referenzbereichs, der in dem die Fahrbahnoberfläche darstellenden Bild (I) vorhanden ist, und
- Kompensieren der Grundfarbenbeträge der Elemente des Bildes (I), um so die Farben zu zeigen, die sie unter einer vorgegebenen Beleuchtungsbedingung bei weißem Sonnenlicht hätten.

13. Verfahren nach einem der vorhergehenden Ansprüche, das das Erkennen von Beschränkungsaufhebungs-Verkehrszeichen, die einen weißen Hintergrund und schräge schwarze Querbänder enthalten, mittels der folgenden Schritte umfasst:
- Identifizieren von Grenzlinien zwischen weißen Bildelementen und schwarzen Bildelementen,
- Auswählen paralleler Linien mit vorgegebenen Abmessungen und Orientierungen aus den Grenzlinien,
- Identifizieren eines Bereichs eines schwarzen Bandes, der zwischen einem Paar ausgewählter Grenzlinien vorhanden ist, und
- Prüfen, dass der Bereich, der durch den den Bereich mit schwarzem Band umschreibenden Kreis begrenzt ist, nur graue, schwarze oder weiße Bildpunkte enthält.

14. Verfahren nach einem der vorhergehenden Ansprüche, das die Klassifizierung des Verkehrszeichens (TS) mittels neuronaler Netze, die vorgegebene Parameter besitzen, in Übereinstimmung mit der erwarteten Farbe und Form des Zeichens (TS) umfasst.

15. Bordinternes automatisches Verkehrszeichenerkennungssystem für Fahrzeuge, das umfasst:
- Mittel (12), um eine Szene (S) der Umgebung außerhalb des Fahrzeugs zu filmen, die in eine Bewegungsrichtung des Fahrzeugs weisen und dazu ausgelegt sind, ein die Szene (S) repräsentierendes Bild (I) zu erzeugen,
- Bildverarbeitungsmittel (14, 16, 20), die dazu ausgelegt sind, einen Bildbereich (A), der eine Darstellung eines Verkehrszeichens (TS) enthält, auszuwählen und das Verkehrszeichen (TS) zu klassifizieren, und
- Anzeigemittel (18), um dem Fahrer des Fahrzeugs das tatsächliche Bild des Zeichens (TS) oder ein vorgegebenes Modell, das das erkannte Zeichen (TS) repräsentiert, anzuzeigen,
**dadurch gekennzeichnet, dass** die Verarbeitungsmittel (14, 16, 20) dazu ausgelegt sind:
- den benachbarten Bildbereich (NA), der sich um den ausgewählten Bildbereich (A) erstreckt, der die Darstellung des Verkehrszeichens (TS) enthält, zu analysieren, wobei die Analyse des benachbarten Bildbereichs (NA) auf jene Verkehrszeichenkategorien eingeschränkt ist, die Zusatztafeln akzeptieren,
- Suchen nach einem Objekt, das in den benachbarten Bereich (NA) dargestellt wird und vorgegebene Charakteristiken hat, die für eine Zusatztafel (PN) typisch sind, und
- Anzeigen des tatsächlichen Bildes des Objekts oder eines vorgegebenen Modells, das die erkannte Zusatztafel (PN) repräsentiert, für den Fahrer des Fahrzeugs, wobei ein Verfahren nach einem der Ansprüche 1 bis 14 implementiert wird.

16. Fahrerassistenzsystem, das an Bord eines Fahrzeugs installiert ist und ein automatisches Verkehrszeichenerkennungssystem nach Anspruch 15 enthält.

## Revendications

1. Procédé pour la reconnaissance automatique de panneaux de signalisation (TS), à bord d'un véhicule, comprenant les étapes consistant à:
- filmer une scène (S) représentative de l'environnement à l'extérieur du véhicule dans la direction de déplacement de celui-ci,
- analyser une image (I) représentative de ladite scène (S) et sélectionner une aire d'image (A) comprenant une représentation d'un panneau de signalisation (TS),
- classifier ledit panneau de signalisation (TS), et
- afficher pour le conducteur du véhicule l'image effective du panneau de signalisation (TS) et/ou un modèle prédéterminé représentatif du panneau de signalisation (TS) reconnu,
**caractérisé en ce qu'**il comprend en outre les étapes consistant à:
- analyser l'aire d'image avoisinante (NA) s'étendant autour de l'aire d'image sélectionnée (A), incluant la représentation du panneau de signalisation (TS), tandis que l'analyse de l'aire d'image avoisinante (NA) est limitée aux catégories de panneaux de signalisation qui acceptent des panneaux supplémentaires,
- chercher un objet qui est représenté dans l'aire avoisinante (NA) et qui a des caractéristiques prédéterminées typiques d'un panneau supplémentaire (PN), et
- afficher pour le conducteur du véhicule l'image effective dudit objet et/ou un modèle prédéterminé représentatif du panneau supplémentaire (PN) reconnu.

2. Procédé selon la revendication 1, dans lequel les caractéristiques prédéterminées typiques d'un panneau supplémentaire comprennent des caractéristiques chromatiques.

3. Procédé selon la revendication 1 ou 2, dans lequel l'analyse de l'aire d'image (NA) avoisinant l'aire d'image (A) comprenant la représentation du panneau de signalisation (TS) est limitée à une portion d'aire qui est dans une relation prédéterminée de l'arrangement spatial par rapport à l'aire d'image (A) du panneau de signalisation (TS), conformément à la classification du panneau (TS).

4. Procédé selon la revendication 3, dans lequel l'analyse de l'aire d'image (NA) avoisinant l'aire d'image (A) comprenant la représentation du panneau de signalisation (TS) est limitée à une portion d'aire de dimensions prédéterminées, selon la taille de ladite aire d'image (A) du panneau de signalisation (TS).

5. Procédé selon l'une quelconque des revendications précédentes, dans lequel la photographie d'une scène (S) représentative de l'environnement extérieur au véhicule est effectuée au moyen d'un seul dispositif de prise de vues (12) opérant à des longueurs d'ondes visibles.

6. Procédé selon l'une quelconque des revendications 1 à 4, dans lequel la prise de vues d'une scène (S) représentative de l'environnement extérieur au véhicule est effectuée au moyen d'une paire de dispositifs de prise de vues (12) opérant à des longueurs d'ondes visibles et adaptés pour procurer une vue stéréoscopique de la scène (S).

7. Procédé selon la revendication 6, dans lequel l'analyse de l'aire d'image (NA) avoisinant l'aire d'image (A) comportant la représentation du panneau de signalisation (TS) est limitée à une portion d'aire qui représente des objets qui sont coplanaires avec le panneau de signalisation (TS) identifié.

8. Procédé selon l'une quelconque des revendications précédentes, comprenant, en vue de l'affichage pour le conducteur du véhicule d'un modèle représentatif du panneau supplémentaire (PN) reconnu, la reconnaissance de symboles, caractères, ou structure intrinsèque prédéterminés de l'inscription du panneau (PN).

9. Procédé selon la revendication 2, dans lequel l'identification d'un objet dans une aire (NA) avoisinant le panneau de signalisation (TS) et ayant des caractéristiques chromatiques prédéterminées comprend l'extraction de la couleur dominante de l'aire (NA) et la vérification de ce que la couleur est ou non blanche ou grise.

10. Procédé selon la revendication 6, comprenant le calcul de la taille absolue du panneau de signalisation (TS), identifiée sur la base de la distance déterminée du panneau (TS) à partir du véhicule, et la confirmation ou la suppression du résultat de la reconnaissance du panneau de signalisation (TS), selon la taille calculée.

11. Procédé selon l'une quelconque des revendications précédentes, dans lequel la sélection d'une aire d'image (A) comportant une représentation d'un panneau de signalisation (TS) est effectuée conformément à la reconnaissance d'une forme à partir d'un répertoire de formes prédéterminées, et/ou un ensemble d'éléments d'image contigus ayant des caractéristiques chromatiques prédéterminées.

12. Procédé selon l'une quelconque des revendications précédentes, comprenant:
- la détermination du spectre coloré de la lumière tombant sur la scène par analyse des contributions à la couleur d'ensemble d'une région de référence qui est présente dans l'image (I) représentant la surface routière, et
- la compensation des quantités de couleurs de base des éléments d'image (I) de manière à montrer les couleurs qu'ils auraient dans un état prédéterminé d'illumination par la lumière solaire blanche.

13. Procédé selon l'une quelconque des revendications précédentes, comprenant la reconnaissance de panneaux de signalisation de fin de restriction ayant un fond blanc avec des bandes transversales noires obliques au moyen des étapes ci-après:
- identification de lignes de démarcation entre des éléments d'image blancs et des éléments d'image noirs,
- sélection, à partir des lignes de démarcation, de lignes parallèles de dimensions et d'orientations prédéterminées,
- identification d'une aire de bande noire située entre une paire de lignes de démarcation sélectionnées, et
- détermination de ce que l'aire délimitée par le cercle qui circonscrit l'aire de la bande noire contient uniquement des points d'image gris, noirs ou blancs.

14. Procédé selon l'une quelconque des revendications précédentes, comprenant la classification du panneau de signalisation (TS) au moyen de réseaux nerveux ayant des paramètres prédéterminés selon la couleur et la forme attendues du panneau (TS).

15. Système de reconnaissance de panneaux de signalisation automatique embarqué pour véhicules, comprenant:
- des moyens (12) pour filmer une scène (S) de l'environnement extérieur au véhicule, faisant face à la direction de déplacement du véhicule et adaptés pour produire une image (I) représentative de ladite scène (S),
- des moyens de traitement de l'image (14, 16, 20) agencés pour la sélection d'une aire d'image (A) incluant une représentation d'un panneau de signalisation (TS) et pour la classification dudit panneau de signalisation (TS), et
- des moyens d'affichage (18) pour afficher pour le conducteur du véhicule l'image effective du panneau (TS) ou d'un modèle prédéterminé représentatif du panneau (TS) reconnu,
**caractérisé en ce que** les moyens de traitement (14, 16, 20) sont agencés pour:
- analyser l'aire d'image avoisinante (NA) s'étendant autour de l'aire d'image sélectionnée (A), incluant la représentation du panneau de signalisation (TS), tandis que l'analyse de l'aire d'image avoisinante (NA) est limitée à des catégories de panneaux de signalisation qui acceptent des panneaux supplémentaires,
- chercher un objet qui est représenté dans l'aire avoisinante (NA) et qui a des caractéristiques prédéterminées typiques d'un panneau supplémentaire (PN), et
- afficher pour le conducteur du véhicule l'image effective de l'objet ou d'un modèle prédéterminé représentatif du panneau supplémentaire (PN) reconnu,
pour la mise en oeuvre d'un procédé selon l'une quelconque des revendications 1 à 14.

16. Système d'aide à la conduite installé à bord d'un véhicule, comprenant un système de reconnaissance automatique des panneaux de signalisation selon la revendication 15.
